# EUROPEAN PATENT APPLICATION

(11) **EP 0 729 214 A2**
(43) Date of publication of application: **28.08.1996**
(21) Application number: 95308566.9
(22) Date of filing: 29.11.1995
(51) Int. Cl.: H02K 3/30, H02K 3/487

(54) **Electric motor for operation in ammonia and refrigeration system including same**

(30) Priority: 21.02.1995 US 391982
(71) Applicant: A.O. Smith Corporation, Milwaukee, Wisconsin 53224 (US)
(72) Inventor: Spears, Jerry L., St. Paris, Ohio 43072 (US)
(74) Representative: Carpenter, David

(57) **Abstract**

An electric motor for use in a refrigeration system for use with a refrigeration fluid including ammonia is disclosed, the system comprising a compressor (16) in communication with the refrigeration fluid. The electric motor is drivingly connected to the compressor (16), the motor contacting the refrigeration fluid and including a stator (32) and a rotor (28) mounted for rotation relative to the stator (32), and at least one of the stator (32) and the rotor (28) including a component formed of material selected from the group consisting of: polyphenylene sulfide, poly (aryl ether ether ketone), and combinations thereof.

## Description

The invention relates to refrigeration systems. More particularly, the invention relates to a refrigeration system including an electric motor for operation in ammonia.

Refrigeration systems typically include a compressor for compressing a refrigeration fluid, and an electric motor drivingly connected to the compressor.

Historically, the most commonly used refrigeration fluids were chlorofluorocarbons (hereinafter "CFCs"). Recently, the use of CFCs for refrigeration has been substantially curtailed or prohibited by force of law. Thus, manufacturers of refrigeration systems have attempted to use different refrigeration fluids, such as ammonia.

Ammonia attacks many materials commonly used in motors. Therefore, refrigeration systems including ammonia are typically constructed with the motor sealed from the ammonia. Constructing refrigeration systems wherein the motor is sealed from the ammonia is relatively expensive.

The invention provides a refrigeration system including a motor for operation in contact with ammonia. The motor includes materials which are resistant to attack by ammonia.

More particularly, the invention provides a refrigeration system including a compressor and a motor drivingly connected to the compressor. The motor includes materials which are resistant to attack by ammonia and is adapted for operation in contact with ammonia. More particularly, the motor includes a stator and a rotor mounted for rotation relative to the stator. The stator includes magnet wire having polyhydantoin insulation. The motor includes lacing cord consisting of kevlar or strands of fiberglass. The stator includes slot liners, a connector block, interphase insulators, wedges and pegs consisting of polyphenylene sulfide or poly (aryl ether ether ketone).

Other features and advantages of the invention will become apparent to those skilled in the art upon review of the following detailed description, claims and drawings.

Fig. 1 is a schematic diagram illustrating a refrigeration system including various features of the invention.

Fig. 2 is a perspective view of the motor illustrated in Fig. 1, with portions of the motor removed for clarity.

Fig. 3 is an enlarged cross sectional view taken generally along line 3-3 in Fig. 2.

Fig. 4 is an enlarged cross sectional view of a magnet wire shown generally in Fig. 3.

Fig. 5 is an enlarged cross sectional view taken generally along line 5-5 in Fig. 2.

Fig. 6 is an enlarged cross sectional view of a lead wire and taken generally along line 6-6 in Fig. 2.

Fig. 7 is an enlarged cross-sectional view of the connector block and taken generally along line 7-7 in Fig. 2.

Before one embodiment of the invention is explained in detail, it is to be understood that the invention is not limited in its application to the details of construction and the arrangement of components set forth in the following description or illustrated in the drawings. The invention is capable of other embodiments and of being practiced or being carried out in various ways. Also, it is to be understood that the phraseology and terminology used herein is for the purpose of description and should not be regarded as limiting.

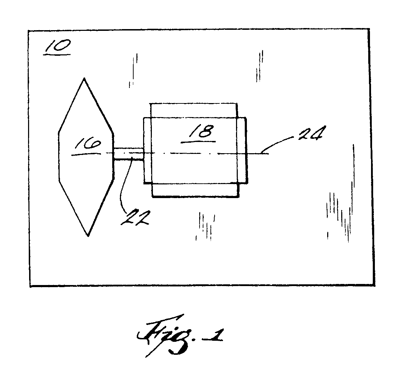

Illustrated in Fig. 1 is a refrigeration system 10 embodying various features of the invention. The refrigeration system 10 is adapted for use with a refrigeration fluid. In the illustrated embodiment, the refrigeration fluid is ammonia. In one embodiment, the ammonia is refrigerant grade R-717 ammonia.

The refrigeration system 10 includes a compressor 16 in communication with the ammonia. The compressor 16 is operable for compressing the ammonia.

The refrigeration system 10 includes an electric motor 18 (hereinafter "motor") drivingly connected to the compressor 16. The motor 18 is in communication with the ammonia. In the illustrated embodiment, the motor 18 is submerged in the ammonia.

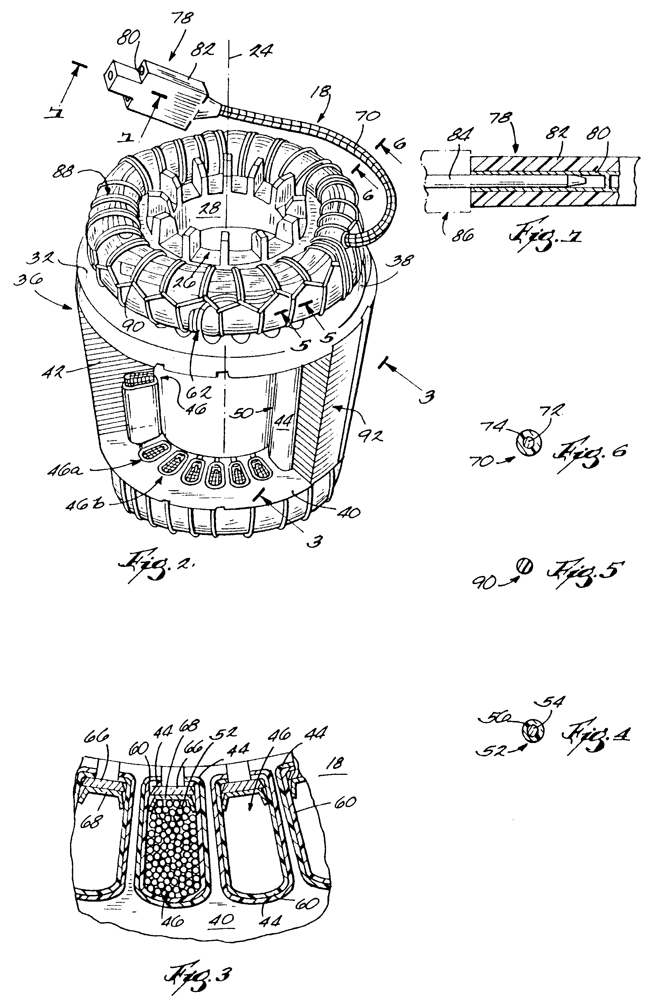

The motor 18 includes a rotor 26 drivingly connected to the compressor 16. The rotor 26 includes a shaft 22 having a longitudinal axis 24. As shown in Fig. 2, the rotor 26 includes a rotor hub 28. The rotor hub 28 is fixed to the shaft 22 (not shown in Fig. 2) for rotation therewith about the longitudinal axis 24. In one embodiment, the rotor hub 28 is formed of high purity aluminum. The rotor 26 also includes a set of permanent magnets (not shown) fixed to the rotor hub.

The motor 18 includes a stator 32. The stator 32 defines a cavity for receiving the rotor 26. The rotor 26 is rotatably mounted relative to the stator 32. The stator 32 includes a core 36 defining opposite end portions 38 and 40. The stator core 36 includes a plurality of circumferentially spaced stacked metal laminations 42 disposed parallel to the shaft 22. In one embodiment, the metal laminations 42 consist of steel. The stator 32 also includes a plurality of circumferentially spaced longitudinal slot walls 44. The slot walls 44 define longitudinal slots 46 in the periphery of the stator 32. The stator 32 also includes a plurality of circumferentially spaced coils 50. Each coil 50 consists of a plurality of windings of magnet wire 52. Each slot 46 has therein a plurality of longitudinally extending portions of the windings of magnet wire 52. Thus, each coil 50 is defined by a plurality of windings of the magnet wire 52 repeatedly passing through a slot 46a, around an end portion 38, passing through another slot 46b adjacent the slot 46, around the other end portion 40, and again through the slot 46a.

As best shown in Fig. 4, the magnet wire 52 consists of conductive material 54 immediately surrounded by magnet wire insulation 56. In one embodiment, the magnet wire insulation 56 is formed of polyhydantoin. In one embodiment, the magnet wire insulation 56 is formed of polyhydantoin and a glass filament overserving. Slot liners 60 are provided in the slots 46 between the windings of magnet wire 52 and the respective slot walls 44. In one embodiment, the slot liners 60 are formed of polyphenylene sulfide. In one embodiment, the slot liners 60 are formed of poly (aryl ether ether ketone). In one embodiment, the slot liners 60 are between about 0.01 and about 0.02 inches in thickness.

The stator 32 also includes interphase insulators 62 between the coils 50. In one embodiment, the interphase insulators 62 are formed of polyphenylene sulfide. In one embodiment, the interphase insulators 62 are formed of poly (aryl ether ether ketone).

The stator 32 also includes filler members 64 in each slot 46 (see Fig. 3). Although any suitable filler members can be used, in the illustrated embodiment the filler members are longitudinally extending wedges 66 and pegs 68. Each wedge 66 is positioned between a respective slot liner 60 and peg 68. Each peg 68 is positioned between a respective wedge 66 and a plurality of magnet wires 52. In one embodiment, the wedges 66 are formed of polyphenylene sulfide. In one embodiment, the wedges 66 are formed of poly (aryl ether ether ketone). In one embodiment, the wedges 66 are formed of maple wood. In one embodiment, the pegs 68 are formed of polyphenylene sulfide. In one embodiment, the pegs 68 are formed of poly (aryl ether ether ketone). The wedges 66 and pegs 68 are secured in interlocking relationship with the stator core 36 to prevent radially outward movement of the coils 50 relative to the stator core 36.

The stator 32 also includes lead wire 70 connected to the magnet wire 52. As best shown in Fig. 6, the lead wire 70 includes conductive material 72 immediately surrounded by lead wire insulation 74. In one embodiment, the conductive material 72 consists of wound strands of aluminum. In one embodiment, the lead wire insulation 74 is teflon tape having a thickness of about 0.002 inches. The teflon tape is wrapped in overlapping relationship about the wound strands of aluminum, such that the proportion of tape overlap is at least about 50%. In one embodiment, the lead wire insulation includes teflon tape wrapped in overlapping relationship and strands or filaments of fiberglass 76 overbraided over the teflon tape. The fiberglass filaments 76 provide a flexible abrasion-resistant covering over the teflon tape. In an alternative embodiment (not shown), the motor can be leadless, such that the magnet wire is directly connected to power terminals.

The motor includes a connector block 78 connected to the lead wire 70. As best shown in Fig. 7, in the illustrated embodiment, the connector block 78 is a female member including terminals 80 and a connector block housing 82. The terminals 80 are adapted for mating with and contacting corresponding terminals 84 of a male member 86 of a power supply (not shown) for supplying electricity to the motor. In one embodiment, the connector block housing 82 is formed of polyphenylene sulfide. In one embodiment, the connector block housing 82 is formed of poly (aryl ether ether ketone). In one embodiment, the terminals 80 are formed of a plated brass alloy. The brass alloy includes suitable percentages of copper and zinc, such as about 65% copper and about 35% zinc. The brass alloy is plated with a suitable plating material, such as tin or silver. In one embodiment, the terminals are formed of phosphorous bronze alloy. The phosphorous bronze alloy includes suitable percentages of copper, tin and phosphorous. In one embodiment, the amount of phosphorous in the phosphorous bronze alloy is between about 0.03% and about 0.35%.

The stator 32 also includes sleeving 88 which protects the lead wire 70 and insulates the lead wires from each other at crossovers between the coils. In one embodiment, the sleeving 88 consists of braided fiberglass which is coated or impregnated with a copolymer modified acrylic resin. A suitable copolymer modified acrylic resin is Varglass Hermetic Sleeving (Varflex Corporation; Rome, N.Y.). In one embodiment, the sleeving 88 consists of teflon.

The stator 32 also includes lacing cord 90 laced about the magnet wire 52, lead wire 70 and sleeving 78. The lacing cord 90 gathers together and secures the magnet wire 52, lead wire 70 and sleeving 78. In one embodiment, the lacing cord 90 is formed of kevlar. In one embodiment, the lacing cord consists of wound strands of fiberglass.

The stator 32 also includes impregnating varnish 92. The impregnating varnish 92 is coated over the end turns of the coils. The varnish 92 can be applied in any suitable manner, such as by immersing the end turns of the coils in the liquid varnish or by trickle application of the liquid varnish. In one embodiment, the impregnating varnish 92 consists of solvent-epoxy material. In one embodiment, the impregnating varnish 92 consists of reactive epoxy material, such as 100% reactive epoxy material, which is catalyzed with a diluent heat-reactive catalyst. A suitable commercially available product is Epoxy 3500 (The P.D. George Company; St. Louis, MO). The impregnating varnish seals the coils from the ammonia environment, bonds the magnet wires together and thus reduces movement of the magnet wires relative to each other, reduces noise from the motor, coats and bonds the laminations in the stator, and anchors the interphase insulation.

The motor 18 formed of the indicated materials is resistant to attack by ammonia. The motor 18 can be mounted in the refrigeration system 10 in contact with ammonia, and the refrigeration system 10 is suitable for operation with the motor 18 in contact with ammonia. Therefore, the refrigeration system 10 can be simply and inexpensively constructed without sealing the motor 18 from the ammonia.

## Claims

1. An electric motor adapted for contact with ammonia, said motor comprising:
a stator (32); and
a rotor (26) mounted for rotation relative to said stator (32);
wherein at least one of said stator (32) and said rotor (26) includes at least one component formed of material selected from the group consisting of: polyphenylene sulfide, poly (aryl ether ether ketone), and combinations thereof.

2. An electric motor as claimed in Claim 1, wherein said stator (32) further comprises coils (50) formed of windings of magnet wire (52).

3. An electric motor as claimed in Claim 2, wherein said magnet wire (52) is provided with insulation (56) formed of polyhydantoin.

4. An electric motor as claimed in Claim 2 or Claim 3, wherein said at least one component comprises a slot liner (60) adjacent respective ones of said coils (50).

5. An electric motor as claimed in any one of Claims 2 to 4, further comprising a connector block (78) connected to said magnet wire (52), and wherein said at least one component comprises a connector block housing (82) of said connector block (78).

6. An electric motor as claimed in any one of Claims 2 to 5, wherein said at least one component comprises an interphase insulator (62) provided between said windings.

7. An electric motor as claimed in any one of Claims 2 to 6, wherein said motor further includes lacing cord (90) for securing said windings, said lacing cord (90) being formed of kevlar.

8. An electric motor as claimed in any one of Claims 2 to 6, wherein said motor further includes lacing cord (90) for securing said windings, said lacing cord (90) being formed of strands of fiberglass.

9. An electric motor as claimed in any one of the preceding claims, wherein said stator (32) includes a plurality of slot walls (44) defining circumferentially spaced slots (46), said stator (32) including coils (50) in said slots (46), and said at least one component comprises wedges (66) and pegs (68) provided in said slots (46) for preventing radially outward movement of said coils (50).

10. An electric motor adapted for contact with ammonia, said motor comprising:
a stator (32) including a core (36) and a plurality of slot walls (44) defining slots (46), said stator (32) including coils (50) in said slots (46) and slot liners (60) between said coils (50) and said slot walls (44), said coils (50) being formed of windings or magnet wire (52), said stator (32) including wedges (66) and pegs (68) in said slots (46) for preventing radially outward movement of said coils (50), and said stator (32) including a connector block (78) connected to said magnet wire (52), at least one of said slot liners (60) interphase insulators (62), wedges (66) and pegs (68), and connector block (78) being formed of material selected from the group consisting of polyphenylene sulfide, poly (aryl ether ether ketone), and combinations thereof; and
a rotor (26) mounted for rotation relative to said stator (32).

11. A refrigeration system for use with a refrigeration fluid including ammonia, said system comprising:
a compressor (16) in communication with the refrigeration fluid; and
an electric motor of the type claimed in any one of the preceding claims drivingly connected to said compressor (16).
